# EUROPEAN PATENT APPLICATION

(11) **EP 4 092 300 A1**
(43) Date of publication of application: **23.11.2022**
(21) Application number: 21174145.9
(22) Date of filing: 17.05.2021
(51) Int. Cl.: F16L 3/10, F16L 55/00, F16B 2/06, G01K 1/143

(54) **PARTS, SYSTEMS, AND METHODS FOR SECURING COMPONENTS TO A PIPE**

(71) Applicant: CASTROL LIMITED, Swindon Wiltshire SN3 1RE (GB)
(72) Inventor: The designation of the inventor has not yet been filed
(74) Representative: Vienne, Aymeric Charles Emile

(57) **Abstract**

A pipe clamp includes a mounting frame configured to be attached to a pipe. The mounting frame has an inner side for facing the pipe and an outer side. The mounting frame includes a longitudinal body configured to extend across an outer circumference of the pipe. The longitudinal body includes a first aperture at a first end and a second aperture at a second end. A first stud is secured to the longitudinal body and extends outward away from the inner side of the mounting frame. Likewise, a second stud that is spaced from the first stud is also secured to the longitudinal body. The second stud also extends outward away from the inner side of the mounting frame. A fastening restraint is configured to extend through the first and second apertures so as to enclose the pipe between the mounting frame and the fastening restraint.

## Description

### BACKGROUND

It can be beneficial to secure elements to pipes. For example, sensors that are secured to pipes can provide meaningful measurements about the status or contents of the pipe.

### OVERVIEW

Aspects and embodiments of the invention are set out in the appended claims. These and other aspects and embodiments are also described herein.

Disclosed herein are parts, systems, and methods for securing components, such as a sensor, to a pipe. Beneficially, various embodiments of the parts, systems and methods can be used in a variety of different positions and may be used with limited impact on the structure of the pipe.

Thus, in a first aspect, the present disclosure provides a pipe clamp comprising:
a mounting frame configured to be attached to a pipe, the mounting frame having an inner side for facing the pipe and an outer side, the mounting frame comprising:
a longitudinal body configured to extend across an outer circumference of the pipe, the longitudinal body including a first aperture at a first end and a second aperture at a second end,
a first stud secured to the longitudinal body and extending outward away from the inner side of the mounting frame, and
a second stud spaced from the first stud, secured to the longitudinal body, and extending outward away from the inner side of the mounting frame; and
a fastening restraint configured to extend through the first and second apertures so as to enclose the pipe between the mounting frame and the fastening restraint.

In one embodiment, the longitudinal body of the mounting frame includes a first side wall configured to engage the pipe, a second side wall configured to engage the pipe, and a support bridge between the first side wall and the second side wall.

In another embodiment, the first aperture and the second aperture are formed through the support bridge.

In another embodiment, each of the first and second studs is positioned between the first side wall and the second side wall of the longitudinal body of the mounting frame.

In another embodiment, the first stud is attached to a first bar extending from the first side wall of the longitudinal body to the second side wall of the longitudinal body, and the second stud is attached to a second bar extending from the first side wall of the longitudinal body to the second side wall of the longitudinal body.

In another embodiment, each of the first stud and second stud includes a free outer end.

In another embodiment, the first and second studs are spaced apart along the second direction.

In another embodiment, the fastening restraint is a curved rod.

In another embodiment, the first stud, second stud, first aperture of the longitudinal body, and second aperture of the longitudinal body lie in a common plane.

In another embodiment, the pipe clamp has a single fastening restraint.

In another embodiment, each of the first stud and the second stud extends outward from the longitudinal body.

In a second aspect, the disclosure provides a clamp assembly for taking measurements on a pipe, the clamp assembly comprising:
a pipe;
a pipe clamp comprising:
   a mounting frame attached to the pipe, the mounting frame having an inner side
      facing the pipe and an outer side, the mounting frame comprising:
      a longitudinal body extending across an outer circumference of the pipe, the longitudinal body including a first aperture at a first end and a second aperture at a second end,
      a first stud secured to the longitudinal body and extending outward away from the inner side of the mounting frame, and
      a second stud spaced from the first stud, secured to the longitudinal body, and extending outward away from the inner side of the mounting frame; and
   a fastening restraint extending through the first aperture, around the pipe, and through the second aperture so as to enclose the pipe between the mounting frame and the fastening restraint.

In one embodiment, the clamp system further includes a sensor coupled to the first and second studs of the pipe clamp.

In another embodiment, the sensor includes a first foot secured to the first stud and a second foot secured to the second stud.

In another embodiment, the sensor includes a sensor housing that is spaced from the pipe, and a waveguide extending between the sensor housing and the pipe.

In another embodiment, the first stud, second stud, first aperture of the longitudinal body, second aperture of the longitudinal body, and waveguide lie in a common plane.

In another embodiment, the mounting frame is attached to a bending section of the pipe.

In another aspect, the disclosure provides a method of securing a clamp assembly to a pipe for taking measurements on the pipe, the method comprising:
placing an inner side of a mounting frame of a pipe clamp against an outer circumference of the pipe, the mounting frame comprising:
   a longitudinal body extending across the outer circumference of the pipe, the longitudinal body including a first aperture at a first end and a second aperture at a second end,
   a first stud secured to the longitudinal body and extending outward away from the inner side of the mounting frame, and
   a second stud spaced from the first stud, secured to the longitudinal body, and extending outward away from the inner side of the mounting frame; and
routing a fastening restraint through the first aperture, around the pipe, and through the second aperture so as to enclose the pipe between the mounting frame and the fastening restraint.

In one embodiment, the method further includes attaching a sensor to the mounting frame by securing a first foot of the sensor to the first stud and securing a second foot of the sensor to the second stud.

In another embodiment, the inner side of the mounting frame of the pipe clamp is placed against the pipe while a fluid is flowing through the pipe.

In another embodiment, the pipe has a temperature in a range from 250 to 600°C.

These as well as other aspects, advantages, and alternatives, will become apparent to those of ordinary skill in the art by reading the following detailed description.

### BRIEF DESCRIPTION OF THE DRAWINGS

The accompanying drawings are included to provide a further understanding of the systems and methods of the disclosure, and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG. 1 is a schematic side view of a pipe clamp according to an embodiment of the disclosure.
FIG. 2 is a schematic perspective view of an embodiment of a clamp assembly including the pipe clamp of FIG. 1.
FIG. 3 is a schematic perspective view of another embodiment of a clamp assembly.
FIG. 4 is a schematic perspective view of another embodiment of a clamp assembly including the pipe clamp of FIG. 1.
FIG. 5 is a schematic perspective view of another embodiment of a clamp assembly including the pipe clamp of FIG. 1.
FIG. 6 is a flow chart of a method according to an embodiment of the disclosure.

### DETAILED DESCRIPTION

Example systems and methods are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. In the following detailed description, reference is made to the accompanying figures, which form a part thereof. In the figures, similar symbols typically identify similar components, unless context dictates otherwise. Other embodiments may be utilized, and other changes may be made, without departing from the scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

As used herein, with respect to measurements, "about" means +/- 5 %.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

Reference herein to "one embodiment" or "one example" means that one or more feature, structure, or characteristic described in connection with the example is included in at least one implementation. The phrases "one embodiment" or "one example" in various places in the specification may or may not be referring to the same example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

In the following description, numerous specific details are set forth to provide a thorough understanding of the disclosed concepts, which may be practiced without some or all of these particulars. In other instances, details of known devices and/or processes have been omitted to avoid unnecessarily obscuring the disclosure. While some concepts will be described in conjunction with specific examples, it will be understood that these examples are not intended to be limiting.

The pipe clamp and methods described herein are adapted for securing a sensor or other component to the outer surface of the pipe (which may also be referred to as a line). In various embodiments, the pipe clamp can be used at range of locations along the length of a pipe. Further, in some embodiments, the sensor can be secured to the pipe without any modification to the pipe by using the pipe clamp of the disclosure.

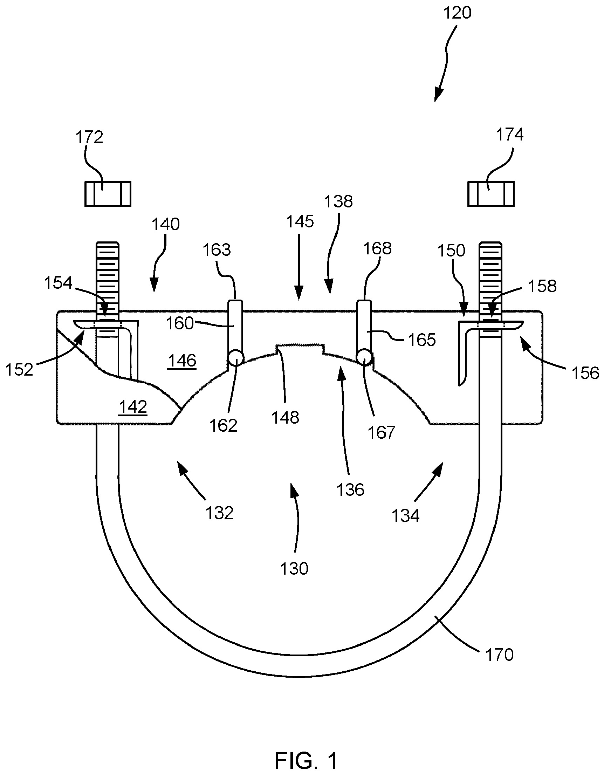

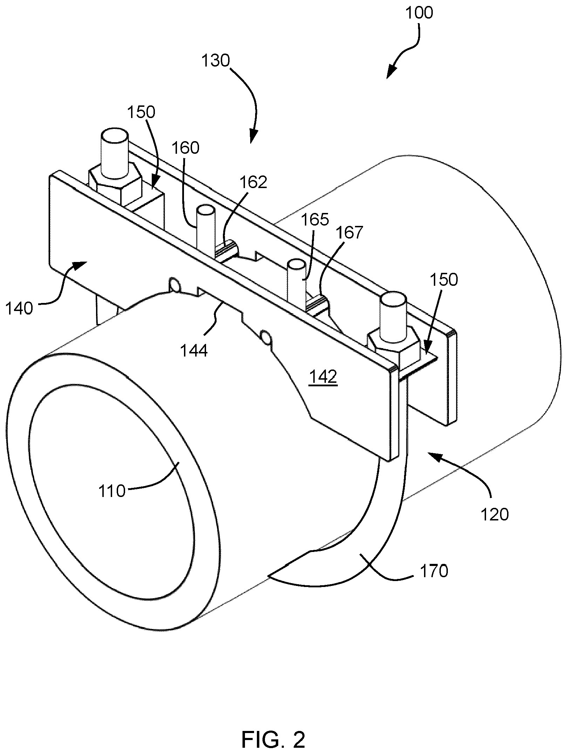

With reference to the Figures, FIG. 1 shows a pipe clamp 120 and FIG. 2 shows an assembly 100 with the pipe clamp 120 secured to a pipe 110. As shown in FIG. 1, the pipe clamp 120 may include a mounting frame 130 configured to be attached to the pipe. The mounting frame 130 may have an inner side 136 that is configured to face the pipe and an outer side 138 configured to face away from the pipe. In some embodiments, such as that shown in FIG. 1, the inner side 136 of the mounting frame 130 may be contoured to match the surface of the pipe. For example, the inner side 136 of the mounting frame 130 may include a portion of a circular section removed so that the mounting frame 130 may fit over a circular outer wall of the pipe. For example, the mounting frame 130 may include a longitudinal body 140 that is configured to extend across an outer circumference of the pipe 110 and fit against the pipe 110, as shown in FIG. 2. The outer circumference of the pipe, as described herein, refers to a direction along the outer surface of a wall of the pipe that is defined by a cross section of the pipe that is normal to the direction of the bulk flow within the pipe.

The longitudinal body 140 may have a first end 132 including a first aperture 154 and a second end 134 including a second aperture 158. The ends of the longitudinal body, as described herein, refer to any part of the longitudinal body that is between a midpoint along the length of the longitudinal body and the distal extremity along the length of the longitudinal body. Thus, in some embodiments, the first aperture 154 may be positioned anywhere along the first end 132 of the longitudinal body between a midpoint 145 of the longitudinal body 140 and the first distal extremity along the length of the longitudinal body 140. Likewise, the second aperture 158 may be positioned anywhere along the second end 134 of the longitudinal body 140 between the midpoint and the second distal extremity along the length of the longitudinal body 140. In other embodiments, the first aperture 154 may be closer to the distal extremity on the first end 132 of the longitudinal body 140 than to the midpoint 145 of the longitudinal body 140 and the second aperture 158 may likewise be closer to the distal extremity on the second end 134 of the longitudinal body 140 than to the midpoint.

The pipe clamp 120 may also include a first stud 160 secured to the longitudinal body 140 and extending outward away from the inner side 136 of the mounting frame 130. The pipe clamp 120 may also include a second stud 165 secured to the longitudinal body 140 and also extending outward away from the inner side 136 of the mounting frame 130.

The pipe clamp 120 may also include a fastening restraint 170 that is configured to extend through the first aperture 154 and second aperture 158. In use, the fastening restraint may extend from the first aperture 154 around the pipe 110 and through the second aperture 158. Accordingly, the fastening restraint 170 can enclose the pipe 110 between the mounting frame 130 and the fastening restraint 170, as shown in FIG. 2, so that the pipe clamp 120 is secured to the pipe 110.

In some embodiments, the longitudinal body 140 of the mounting frame 130 may include a first side wall 142 and a second side wall 146 that are both configured to engage the pipe 110. A majority of first side wall 142 is removed in FIG. 1 to reveal other elements of the pipe clamp 120. A support bridge 150 may be positioned between the first side wall 142 and the second side wall 146. The support bridge 150 may hold the first side wall 142 and second side wall 146 together to form the longitudinal body 140 of the mounting frame 130.

In some embodiments, the first side wall 142 may include a notch 144 (see FIG. 2) along an inner edge of the first side wall 142 to provide a window to view the space between the first side wall 142 and second side wall 146. This window can be useful in determining the position of a sensor with respect to the surface of the pipe, as explained in more detail below. In some embodiments, the second side wall 146 may also include such a notch 148 on the inner edge thereof. In other embodiments, only one of the side walls include a notch. Further, in some embodiments neither side wall includes such a notch.

In some embodiments, the support bridge 150 may be formed of two or more sections that couple the first side wall 142 and second side wall 146. For example, the embodiment depicted in FIGS. 1 and 2 include a support bridge 150 that has a first section 152 and a second section 156 that connect the first side wall 142 and second side wall 146. In particular, the first section 152 and second section 156 are each formed as L-shaped supports that extends from the first side wall 142 to the second side wall 146. For example, each of the first section 152 and second section 156 of support bridge 150 includes a horizontal flange and a vertical flange that form the respective L-shaped support.

In other embodiments, the support bridge 150 may be formed by more than two sections. Further, in some embodiments, the support bridge 150 may be formed as a single element that extends between the first side wall 142 and second side wall 146. For example, the support bridge 150 may be formed as a single support extending between the side walls that includes openings for certain features of the pipe clamp, such as the studs or a sensor, as described in more detail below.

In some embodiments, the first aperture 154 and the second aperture 158 may be formed through the support bridge 150. For example, in the embodiment depicted in FIGS. 1 and 2, the first aperture 154 extends through the first section 152 of the support bridge 150 and the second aperture 158 extends through the second section 156 of the support bridge. In particular, the first aperture 154 and second aperture 158 of the embodiment shown in FIGS. 1 and 2 extend through the horizontal flange of the L-shaped support of the respective first section 152 and second section 156 of the support bridge 150. In other embodiments the first aperture 154 and second aperture 158 may be provided between sections of the support bridge 150.

In some embodiments, each of the first stud 160 and second stud 165 may be positioned between the first side wall 142 and the second side wall 146 of the longitudinal body 140 of the mounting frame 130. Likewise, as shown in the embodiment of FIGS. 1 and 2, the first stud 160 and second stud 165 may also be positioned between the first section 152 and second section 156 of the support bridge.

In some embodiments, the first stud 160 may be attached to a first bar 162 that extends from the first side wall 142 of the longitudinal body 140 to the second side wall 146 of the longitudinal body 140. Likewise, the second stud 165 may also be attached to a second bar 167 that extends from the first side wall 142 of the longitudinal body 140 to the second side wall 146 of the longitudinal body 140. For example, the cross sections of the first bar 162 and second bar 167 are shown in FIG. 1. Further, a portion of the first bar 162 and second bar 167 is visible in the perspective view of FIG. 2.

In some embodiments, each of the first bar 162 and second bar 167 may be positioned on the inner side 136 of the mounting frame 130, such that the first bar 162 and second bar 167 is configured to brace against the pipe 110. In other embodiments, the first bar 162 and second bar 167 may be positioned between the inner side 136 and outer side 138 of the mounting frame 130. Further in some embodiments, the first stud 160 may be attached to the first bar 162 at a lower end of the first stud 160, such as is shown in FIG. 1 In other embodiments, the first stud 160 may be secured to the first bar 162 along its side. The second stud 165 may have similar configurations in different embodiments, and may be secured to the second bar 167 at a lower end of the second stud 165 or on the side of the second stud 165. Further still, in some embodiments, the first stud 160 and second stud 165 may be secured to the support bridge 150, rather than a separate bar. Moreover, while the foregoing embodiments are described with the first stud 160 and second stud 165 having similar attachment configurations, it is also possible for the first stud 160 and second stud 165 to have different attachment configurations. For example, in some embodiments, the first stud 160 may be secured by a first bar 162 while the second stud 165 is secured to the support bridge 150. Other configurations are also possible.

In some embodiments, the first stud 160 has a first free outer end 163 and the second stud 165 includes a second free outer end 168. For example, as shown in the embodiment of FIGS. 1 and 2, the end of the first stud 160 that is on the outer side 138 of the mounting frame 130 is free and unattached to any structures. In contrast, the inner side of the first stud 160 of the embodiment in FIGS. 1 and 2 is connected to the first bar 162, as described above. The second stud 165 of the embodiments of FIGS. 1 and 2 has a similar configuration. The first free outer end 163 and second free outer end 168 of the studs allows the studs to be

In some embodiments, the first stud 160 and second stud 165 may be spaced apart over the outer circumference of the pipe 110. For example, in some embodiments, the second stud 165 may be spaced along the length of the longitudinal body 140 from the first stud 160. For example, in some embodiments, the longitudinal body 140 of the mounting frame 130 may be oriented to extend across the outer circumference of the pipe 110, as shown in FIG. 2, and the first stud 160 and second stud 165 may be positioned on opposing sides of the midpoint 145 of the longitudinal body 140. Accordingly, in such an embodiment, the first stud 160 is spaced from the second stud 165 across the midpoint 145 of the longitudinal body.

In some embodiments, the first stud 160 may be parallel to the second stud 165. For example, as shown in FIG. 1, the first stud 160 and second stud 165 may extend in the same direction from the inner side 136 of the mounting frame 130 toward the outer side 138 of the mounting frame 130. This parallel alignment of the two studs may provide an accommodating structure for securing a peripheral device, such as a sensor, to the pipe claim 110 using the first stud 160 and second stud 165, as explained in more detail below.

In some embodiments, the fastening restraint 170 is a curved rod. For example, in the embodiment depicted in FIGS. 1 and 2, the fastening restraint 170 is in the form of a U-shaped rod configured to extend around the body of the pipe so as to hold the pipe clamp 120 securely to the pipe 110, as shown in FIG. 2. As an example, the curved rod may be a U-bolt according to DIN 3570. In some embodiments, the fastening restraint 170 may be threaded to allow fasteners to hold the mounting frame 130 to the fastening restraint 170. For example, the fastening restraint 170 of FIG. 1 includes threads so that a first nut 172 and a second nut 174 may hold the fastening restraint 170 in place. In some embodiments, the entire rod may be threaded. In other embodiments, only the end sections of the rod are threaded. Still, in other embodiments, the rod may be left unthreaded. For example, in some embodiments the fastening restraint may be held in place using an unthreaded fasteners, such as a collar with a set screw, a ring clamp, or another configuration.

Further, in other embodiments, the fastening restraint may be formed as a tension member, such as a chain, a cable, or a strap. In such embodiments, the clamp may include one or more fasteners configured to hold an end of the tension member, such as a cable clip or strap fastener. Still, in other embodiments, the fastening restraint may have a more complex configuration. For example, in some embodiments, the fastening restraint may include one or more additional mounting frames. The additional mounting frame may allow the pipe clamp to be used with more than one sensor. For example, each mounting frame may be used to secure a sensor to the pipe. In other words, in some embodiments, the pipe clamp may include two mounting frames secured to one another using rods or other tension members. In such a case, the two rods and the second mounting frame form the fastening restraint for the first mounting frame. Likewise, the first mounting frame and rods form the fastening restraint for the second mounting frame.

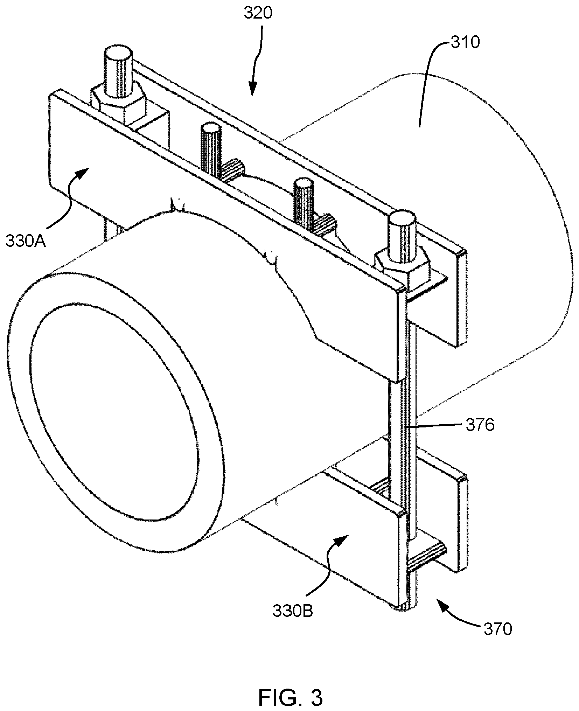

Such a configuration is shown in FIG. 3, which shows a pipe clamp 320 secured to a pipe 310. The embodiment of the pipe clamp 320 shown in FIG. 3 includes a first mounting frame 330A and a second mounting frame 330B that are secured to opposing sides of the pipe 310. The first mounting frame 330A is secured to the second mounting frame 330B by rods 376. Accordingly, the rods 376 and second mounting frame 330B act to hold the first mounting frame 330A in place. Thus, the rods 376 and second mounting frame 330B form the fastening restraint 370 for the first mounting frame 330A. Such a configuration may allow multiple components to be secured to the pipe using the pipe clamp. For example, the configuration shown in FIG. 3, which includes two mounting frames, may be used to secure two sensors to the pipe. Other configurations that include more than two mounting frames and can accommodate more than two sensors/components are also possible.

In some embodiments, components of the pipe clamp 120 may be aligned in a common plane. For example, in the embodiment shown in FIGS. 1 and 2, the first stud 160, the second stud 165, the first aperture 154 of the longitudinal body 140, and the second aperture 158 of the longitudinal body 140 lie in a common plane. In some embodiments, the fastening restraint 170 may also lie in a common plane with these elements. Providing the studs and apertures in a common plane may reduce the overall width of the pipe claim 120, where the pipe clamp width extends along the length of the pipe. By reducing this width, the pipe clamp 120 may be used on both straight and non-straight sections of pipe.

Likewise, in some embodiments, the pipe clamp 120 may have a single fastening restraint 170. In other words, in some embodiments, the pipe clamp 120 may be secured to the pipe 110 using one, and only one, fastening restraint 170 that extends around the pipe 110 at a single location along the length of the pipe 110. In contrast, in some embodiments, the pipe clamp 120 may be secured to the pipe 110 using fastening restraints that are positioned at two or more positions along the length of the pipe 110. The use of a single fastening restraint 170 may reduce the width of the pipe clamp 120, providing more flexibility for securing the pipe clamp 120 at various locations, as explained above.

In some embodiments, each of the first stud 160 and the second stud 165 extends outward from the longitudinal body 140. In other words, in some embodiments, the outer end 163 of the first stud 160 may extend outward past the outer side 138 of the mounting frame 130. Likewise, the outer end 168 of the second stud 165 may also extend outward past the outer side 138 of the mounting frame 130. Such a configuration may allow for easier access to the studs 160, 165 for securing a component to the studs.

In another aspect, the disclosure provides a clamp assembly for taking measurements on a pipe, where the clamp assembly includes a pipe and a pipe clamp according to the disclosure that is secured to the pipe. For example, FIG. 2 shows the pipe clamp 120 secured to the pipe 110 so as to form a clamp assembly 100.

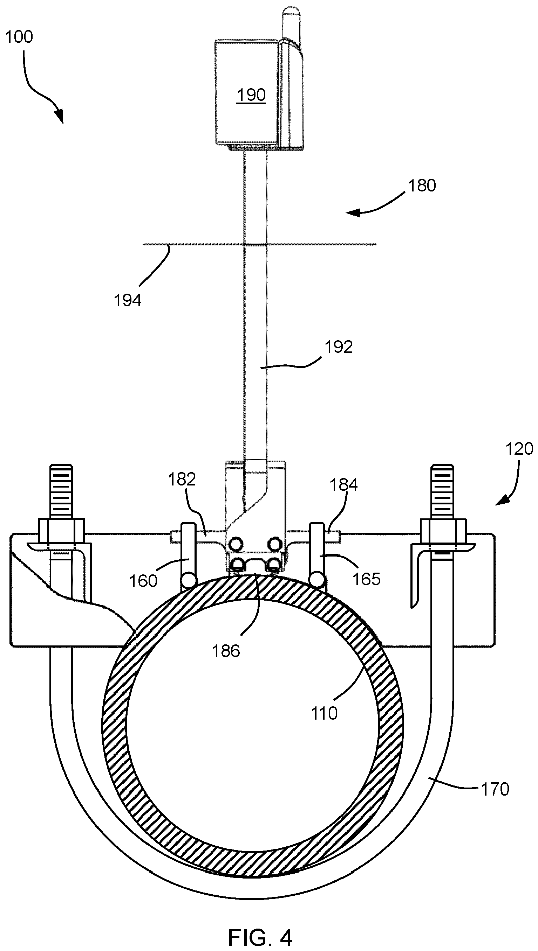

In some embodiments, the clamp assembly may include a sensor coupled to the pipe clamp. For example, as shown in FIG. 4, clamp assembly 100 may include a sensor 180 coupled to the first stud 160 and the second stud 165 of the pipe clamp 120. The sensor 180 may be configured to take measurements of characteristics of the pipe or of the contents of the pipe. For example, in some embodiments, the sensor may include a sensor that measures the thickness of the pipe wall and can be used to determine the impact of corrosion on the structural integrity of the pipe, such as an ultrasonic sensor. Other types of sensors are also possible.

In some embodiments of the clamp assembly, the sensor 180 may include a first foot 182 secured to the first stud 160 and a second foot 184 secured to the second stud 165 in order to attach the sensor 180 to the pipe clamp 120. For example, each of the first foot 182 and the second foot 184 may include a pair of prongs that are configured to be secured on opposing sides of the respective stud 160, 165 so as to fix the sensor 180 to the pipe clamp 120. Furthermore, the sensor 180 may be positioned so that a tip 186 of the sensor is placed against a surface of the pipe 110. To facilitate proper positioning of the sensor tip 186, the first side wall 142 may include a notch 144 along the inner side 136 of the mounting frame 130 to allow the sensor tip 186 to be viewed while the sensor 180 is attached to the pipe clamp 120. Accordingly, the installer may visually confirm that the sensor tip 186 is correctly placed before the attachment of the sensor 180 to the pipe clamp 120 is completed.

In some embodiments of the clamp assembly, the sensor 180 may include a sensor housing 190 that is spaced from the surface of the pipe 110 and a waveguide 192 that extends between the sensor housing 190 and the sensor tip 186 at the surface of the pipe 110. The sensor housing may be configured to house electrical components of the sensor, such as measurement instruments, as well as processing and communication electronics. Of course, in some embodiments, some measurement instruments may also be located at the sensor tip. The sensor housing 190 can help protect sensitive components. Moreover, the position of the sensor housing 190 at a location that is spaced from the pipe 110 can also help protect the sensor 180, for example when the pipe is operated at elevated temperatures. In some embodiments, the sensor 180 may also include a shield 194 along the waveguide 192 to provide further protection of the components in the sensor housing 190.

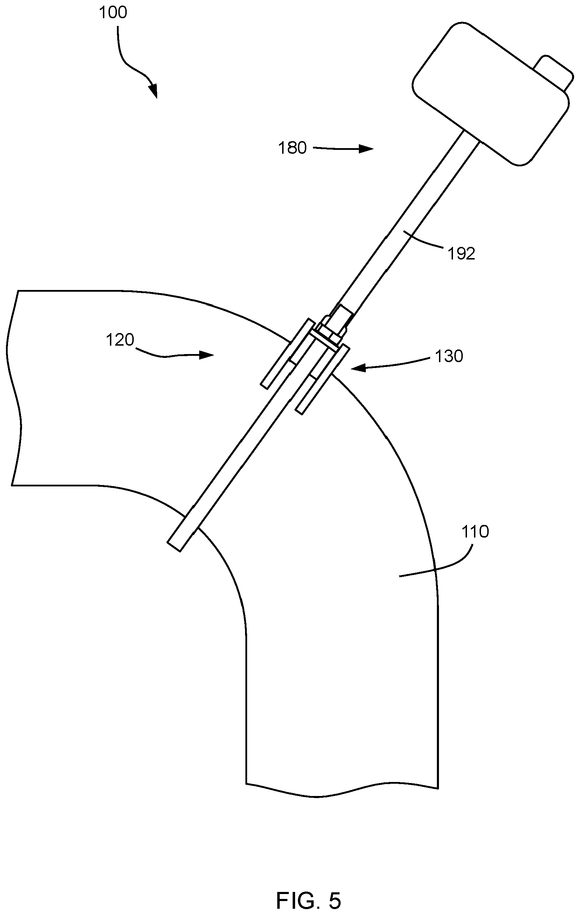

In some embodiments of the clamp assembly, the first stud 160, the second stud 165, the first aperture 154 of the longitudinal body 140, the second aperture 158 of the longitudinal body 140, and the waveguide 192 lie in a common plane. For example, as shown in FIG. 5, the clamp assembly 100 may be configured so that the elements of the pipe clamp 120 and sensor 180 are aligned in a common plane, such that the width of the clamp assembly 100 is thin. This narrow width of the pipe clamp 120 and sensor 180 can allow versatility in the positioning of the pipe clamp 120. For example, because the pipe clamp 120 and waveguide 192 are thin and aligned in a common plane, the pipe clamp 120 can be secured to areas of a pipe that are not straight. For example, in some embodiments of the clamp assembly 100, the mounting frame 130 may be attached to a bending section of the pipe 110, as shown in FIG. 5. The term bending section, as used herein, refers to a section of the pipe where bulk flow of material in the pipe is turning along a bend and the central axis of the pipe is not straight.

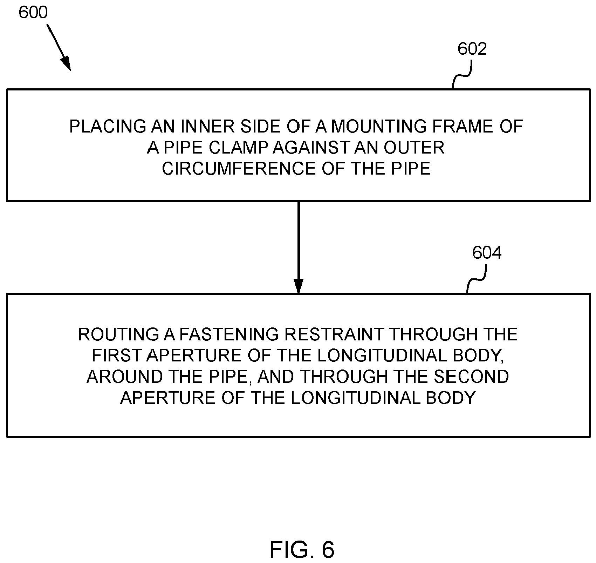

In another aspect, the disclosure provides a method of securing a clamp assembly to a pipe for taking measurements on the pipe. FIG. 6 illustrates an embodiment of such a method 600. In various embodiments, the method 600 may be performed using any of the pipe clamp configurations describes above. As shown at block 602, the method 600 may involve placing an inner side of a mounting frame of a pipe clamp against an outer circumference of the pipe. Like the pipe clamp 120 described above, the mounting frame of the pipe clamp used in the method 600 may include a longitudinal body that has a first aperture at a first end and a second aperture at a second end. The mounting frame may be oriented such that longitudinal body extends across the outer circumference of the pipe. Moreover, the mounting frame may also include a first stud secured to the longitudinal body and extending outward away from an inner side of the mounting frame, and a second stud spaced from the first stud, secured to the longitudinal body, and extending outward away from the inner side of the mounting frame.

As shown at block 604, the method may also involve routing a fastening restraint through the first aperture of the longitudinal body of the mounting frame, around the pipe, and through the second aperture of the longitudinal body of the mounting frame. Accordingly, the fastening restraint may enclose the pipe between the mounting frame and the fastening restraint, thereby securing the pipe clamp to the pipe.

In some embodiments of the method, a sensor is attached to the mounting frame by securing a first foot of the sensor to the first stud and securing a second foot of the sensor to the second stud. For example, the sensor 180 shown in FIG. 5 may be secured to the mounting frame by securing the first foot 182 to the first stud 160 of the pipe clamp 120 and securing the second foot 184 to the second stud 165 of the pipe clamp 120.

In some embodiments of the method, the inner side of the mounting frame of the pipe clamp is placed against the pipe while a fluid is flowing through the pipe. For example, in some embodiments the pipe clamp may be installed while the pipe is in service. Because embodiments of the pipe clamp can be installed without the need for welding or other structural modification of the pipe, fluid flow through the pipe does not need to be stopped nor do the pipes need to be drained during the installation process. For example, using some embodiments of the pipe clamp, a sensor or other component can be installed on a pipe without welding studs to the pipe.

In some embodiments of the method, the pipe has a temperature in a range from 250 to 600°C. For example, in some embodiments the pipe clamp may be used with pipes that operate at highly elevated temperatures. Further, embodiments of the pipe clamp may allow for installation while the pipe is operating at such elevated temperatures, because the installation does not involve prolonged or complicated contact with the structure of the pipe. Moreover, embodiments of the pipe clamp can be used with sensors that have sensor housings spaced from the pipe, which may protect the sensor components, as explained in more detail above. In other embodiments the pipe has a temperature that is not elevated. For example, in some embodiments, the pipe is at a temperature below 100°C, such as at ambient temperature.

In some embodiments of the method, the clamp can be repositioned to allow measurements to be taken from more than position. For example, in some embodiments, a sensor that is secured to the pipe clamp may be used to take a first measurement and then the pipe clamp may be rotated or shifted before a second measurement is taken at a new position or location.

The above detailed description describes various features and functions of the disclosed systems, devices, and methods with reference to the accompanying Figures. In the Figures, similar symbols typically identify similar components, unless context dictates otherwise. The illustrative embodiments described in the detailed description, Figures, and claims are not meant to be limiting. Other embodiments can be utilized, and other changes can be made, without departing from the scope of the subject matter presented herein. It will be readily understood that the aspects of the present disclosure, as generally described herein, and illustrated in the Figures, can be arranged, substituted, combined, separated, and designed in a wide variety of different configurations, all of which are explicitly contemplated herein.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A pipe clamp comprising:
a mounting frame configured to be attached to a pipe, the mounting frame having an inner side for facing the pipe and an outer side, the mounting frame comprising:
a longitudinal body configured to extend across an outer circumference of the pipe, the longitudinal body including a first aperture at a first end and a second aperture at a second end,
a first stud secured to the longitudinal body and extending outward away from the inner side of the mounting frame, and
a second stud spaced from the first stud, secured to the longitudinal body, and extending outward away from the inner side of the mounting frame; and
a fastening restraint configured to extend through the first and second apertures so as to enclose the pipe between the mounting frame and the fastening restraint.

2. The pipe clamp according to claim 1, wherein the longitudinal body of the mounting frame includes a first side wall configured to engage the pipe, a second side wall configured to engage the pipe, and a support bridge between the first side wall and the second side wall.

3. The pipe clamp according to claim 2, wherein the first aperture and the second aperture are formed through the support bridge.

4. The pipe clamp according to claim 2, wherein each of the first and second studs is positioned between the first side wall and the second side wall of the longitudinal body of the mounting frame.

5. The pipe clamp according to claim 2, wherein the first stud is attached to a first bar extending from the first side wall of the longitudinal body to the second side wall of the longitudinal body, and
wherein the second stud is attached to a second bar extending from the first side wall of the longitudinal body to the second side wall of the longitudinal body,
optionally wherein each of the first stud and second stud includes a free outer end.

6. The pipe clamp according to any of the preceding claims, wherein the first and second studs are spaced apart over the outer circumference of the pipe, or
wherein the fastening restraint is a curved rod.

7. The pipe clamp according to any of the preceding claims, wherein the first stud, second stud, first aperture of the longitudinal body, and second aperture of the longitudinal body lie in a common plane.

8. The pipe clamp according to any of the preceding claims, wherein the pipe clamp has a single fastening restraint, or
wherein each of the first stud and the second stud extends outward from the longitudinal body.

9. A clamp assembly for taking measurements on a pipe, the clamp assembly comprising:
a pipe;
a pipe clamp comprising:
a mounting frame attached to the pipe, the mounting frame having an inner side facing the pipe and an outer side, the mounting frame comprising:
a longitudinal body extending across an outer circumference of the pipe, the longitudinal body including a first aperture at a first end and a second aperture at a second end,
a first stud secured to the longitudinal body and extending outward away from the inner side of the mounting frame, and
a second stud spaced from the first stud, secured to the longitudinal body, and extending outward away from the inner side of the mounting frame; and
a fastening restraint extending through the first aperture, around the pipe, and through the second aperture so as to enclose the pipe between the mounting frame and the fastening restraint.

10. The clamp assembly according to claim 9, further comprising a sensor coupled to the first and second studs of the pipe clamp,
optionally wherein the sensor includes a first foot secured to the first stud and a second foot secured to the second stud, or
optionally wherein the sensor includes:
a sensor housing that is spaced from the pipe, and
a waveguide extending between the sensor housing and the pipe, optionally wherein the first stud, second stud, first aperture of the longitudinal body, second aperture of the longitudinal body, and waveguide lie in a common plane.

11. The clamp assembly according to claim 9 or 10, wherein the mounting frame is attached to a bending section of the pipe.

12. A method of securing a clamp assembly to a pipe for taking measurements on the pipe, the method comprising:
placing an inner side of a mounting frame of a pipe clamp against an outer circumference of the pipe, the mounting frame comprising:
a longitudinal body extending across the outer circumference of the pipe, the longitudinal body including a first aperture at a first end and a second aperture at a second end,
a first stud secured to the longitudinal body and extending outward away from the inner side of the mounting frame, and
a second stud spaced from the first stud, secured to the longitudinal body, and extending outward away from the inner side of the mounting frame; and
routing a fastening restraint through the first aperture, around the pipe, and through the second aperture so as to enclose the pipe between the mounting frame and the fastening restraint.

13. The method of claim 12, further comprising attaching a sensor to the mounting frame by securing a first foot of the sensor to the first stud and securing a second foot of the sensor to the second stud.

14. The method of claim 12 or 13, wherein the inner side of the mounting frame of the pipe clamp is placed against the pipe while a fluid is flowing through the pipe.

15. The method of any of claims 12 to 14, wherein the pipe has a temperature in a range from 250 to 600°C.
